# EUROPEAN PATENT SPECIFICATION

(11) **EP 0 295 087 B1**
(45) Date of publication and mention of the grant of the patent: **17.04.1996**
(21) Application number: 88305245.8
(22) Date of filing: 08.06.1988
(51) Int. Cl.: H04N 9/44

(54) **Apparatus for compatibly locking horizontal sync signal to PAL colour subcarrier**
Vorrichtung zur kompatiblen Verriegelung des horizontalen Synchronimpulses mit dem PAL-Farbhilfsträger
Dispositif de verrouillage compatible du signal de synchronisation horizontal sur la sous-porteuse couleur PAL

(30) Priority: 09.06.1987 US 60097
(43) Date of publication of application: 14.12.1988
(73) Proprietor: MATSUSHITA ELECTRIC INDUSTRIAL CO., LTD., Kadoma-shi, Osaka-fu, 571 (JP)
(72) Inventor: Dischert, Lee Robert, Medford New Jersey 08055 (US); Topper, Robert Joseph, Hatboro Pennsylvania 19040 (US)
(74) Representative: Adams, William Gordon

(56) References cited:
- US-A- 4 450 474

## Description

In the present PAL colour television system the colour subcarrier frequency is an integral submultiple of the horizontal scanning frequency plus a frame frequency offset of 25 Hertz for the purpose of making dot crawl from the colour subcarrier less objectionable. This requires more complex circuits for generating the horizontal sync and subcarrier. Whereas this can be done with analogue circuitry, the problem becomes more complex when the signals are to be generated by digital means.

The invention provides apparatus for generating synchronizing signals for use in a PAL colour television system, said apparatus comprising a sync generator for providing standard synchronizing signals of a PAL system including a signal at the subcarrier frequency (f_{sc}), a vertical synchronizing signal (V) and a line synchronizing signal (H) comprising a sequence of line sync pulses, said apparatus further comprising:
means responsive to signals provided by said sync generator for producing another line synchronizing signal comprising a sequence of other line sync pulses having a period during the active scan period such that an integral number of quarter cycles of the subcarrier occur between consecutive said other line sync pulses, the timing of said other line sync pulses during each vertical blanking interval incorporating an additional delay of half a subcarrier period such that the average period of said another line synchronizing signal is the same as the average period of said standard line synchronizing signal, and
means coupled to said sync generator and to said means for producing said other line synchronizing signal for combining at least said vertical synchronizing signal and said another line synchronizing signal.

In a particular embodiment, the horizontal scanning frequency during the active scan period (that is, other than during the vertical blanking interval) may be increased by 100/1135 Hertz. In order to keep the horizontal and vertical scanning frequencies locked, one line during each vertical blanking interval is increased by an amount required to compensate for the accumulated error. In a PAL system sampled at four times the subcarrier frequency, the additional time is two pixels.

Use of this altered horizontal sync frequency enables the horizontal and subcarrier frequencies to be locked every four lines while maintaining the beneficial effects of the 25 Hertz frame frequency offset.

Thus if PAL transmitters used this horizontal sync signal, there would be no difference in the operation of home receivers but the circuits for studio equipment that cooperates with a transmitter would be far simpler. On the other hand if the horizontal sync frequency remains as it is, the horizontal sync frequency just described could be derived from it and used by studio equipment. Because the phase of the horizontal sync with respect to the colour subcarrier repeats every eight fields, it is far more difficult to attain tight phase lock between sync and the subcarrier than it would be if the phase repeated every four lines, as it would do with the horizontal frequency suggested herein.

US Patent US-A-4 450 474 in the name of Mizukami discloses a PAL sync generation system in which a sync generator provides a multi-component signal, one component being a line frequency signal having a period which is an integral multiple of one quarter the subcarrier period. The sync generator output is subsequently corrected, by phase modulation, whereby the line frequency signal provides a standard PAL line frequency signal relative to which the subcarrier has the 25 HZ field frequency offset. Thus, although the line component in the sync generator output generally corresponds to the "other" line frequency synchronising signal which is generated in the present invention, it is then corrected to the standard line frequency signal, and is not combined with a standard PAL vertical sync signal as in the present invention; furthermore this "other" line frequency signal is not derived from a standard PAL sync signal, as in the present invention. Indeed, the purpose in Mizukami is to provide a standard PAL signal, whereas the purpose of the present invention is to provide a signal having a non-standard line frequency component.

The invention also provides apparatus for generating synchronizing signals for use in a PAL colour television system, said apparatus comprising a sync generator for supplying standard line and field synchronizing signals (H, V) and a signal (F_{sc}) of standard subcarrier frequency, said line synchronising signal comprising a sequence of standard line sync pulses, said apparatus further comprising:
means responsive to signals supplied by said sync generator for producing another line synchronizing signal comprising a sequence of other line sync pulses, said another line synchronising signal having a shorter period during the active scan period than said standard line synchronizing signal such that an integral number of quarter cycles of said subcarrier occur during each line scanning interval,
means responsive to the signals supplied by said sync generator for increasing the time between said other line sync pulses occurring during each vertical blanking interval such that the average period of said another line synchronizing signal is the same as the average period of said standard line synchronizing signal, and
means for combining the vertical synchronizing signal supplied by said sync generator with said another line synchronizing signal.

The invention will be exemplified by reference to the accompanying drawings in which:
Figure 1 is a block diagram of a circuit incorporating the invention in which the desired line scanning frequency is derived from the PAL subcarrier or burst;
Figure 2 is a block diagram of a circuit incorporating the invention in which the desired line scanning frequency is derived from the PAL line scanning frequency and subcarrier; and
Figure 3 shows a way of generating the standard PAL sync signals.

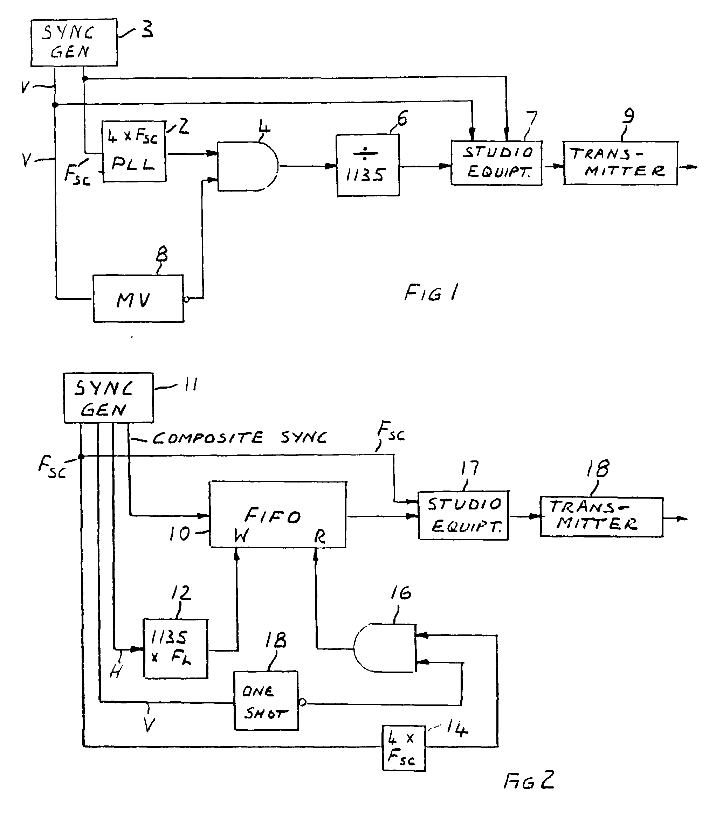

Figure 1 has a phase locked loop 2 that multiplies the subcarrier frequency applied to it from a sync generator 3 by four. It may operate in response to a burst of the PAL subcarrier frequency or the subcarrier frequency itself. The output of loop 2 is applied to one input of an AND gate 4. The output of the AND gate 4 is divided by 1135 in a divider 6. Pulses from a vertical sync generator or separator are applied to a one shot circuit 8 so as to generate a pulse that is two pixels wide during each vertical blanking period. In this embodiment, the pulses are negative and are applied to the other input of the AND gate 4 so as to prevent the pulses applied to the input from reaching the output of the AND gate 4. Alternatively, the output of the one shot circuit 8 can be applied to the counter reset. Vertical synchronizing pulses and waves of the color subcarrier frequency as well as the line synchronizing pulses from the divider 6 are combined in any suitable manner in studio equipment 7 that supplies video signals to a transmitter 9.

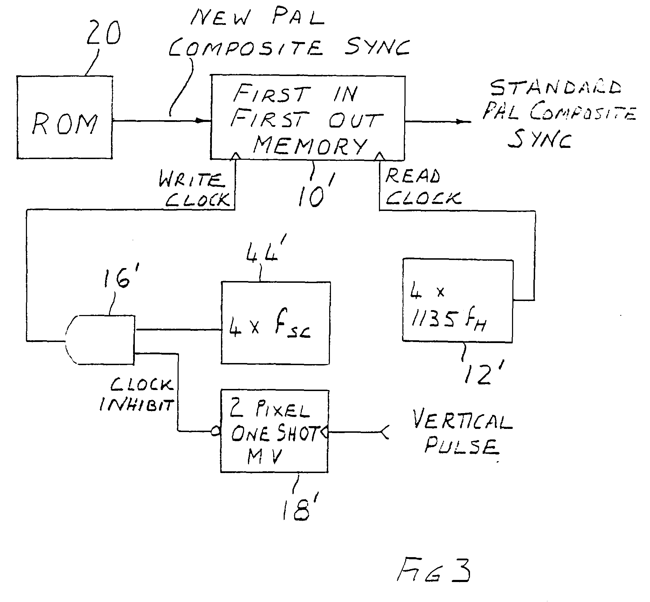

In Figure 2 a PAL composite sync from a sync generator 11 is applied to a FIFO memory 10. Its write clock input is connected to means 12 for multiplying the line scanning frequency by 4 x 1135. The output of the FIFO 10 is the new PAL composite sync signal. A source 14 of a frequency equal to four times the subcarrier frequency is applied to one input of an AND gate 16. A vertical scanning frequency derived from the PAL composite sync is applied to a two pixel one shot circuit 18, and its output is applied to another input of the AND gate 16. The output of the AND gate 16 is applied to the read terminal of the FIFO 10. Vertical synchronizing pulses and waves of the color subcarrier frequency as well as the line synchronizing pulses from the FIFO 10 are combined in any suitable manner in studio equipment 17 that supplies video signals to a transmitter 18. Note that the read is faster than the write but the number of clock pulses in a field is the same because of the inhibiting by the AND gate 16.

If a ROM were used to generate the standard PAL sync signals, it would have to store eight fields because this is the time it takes the phase relationship between horizontal sync and the color subcarrier to repeat. In accordance with another aspect of this invention, a far simpler way of generating the standard PAL sync signals is provided as illustrated in Figure 3 in which components corresponding to those of Figure 2 have the same designations primed. A ROM 20 that provides the new composite sync in which the horizontal sync has the same phase relationship with the color subcarrier every fourth line supplies signals to the input of the FIFO 10′. It only needs to be four lines long. The output of the multiplying means 12′ is connected to the read clock input of the FIFO 10′, and the output of the AND gate 16′ is connected to the write clock input of the FIFO 10′. This slows the higher frequency sync signals provided by the ROM 20 to the standard PAL frequency.

## Claims

1. Apparatus for generating synchronizing signals for use in a PAL colour television system, said apparatus comprising a sync generator (3; 11) for providing standard synchronizing signals of a PAL system including a signal at the subcarrier frequency (f_{sc}), a vertical synchronizing signal (V) and a line synchronizing signal (H) comprising a sequence of line sync pulses, characterised by further comprising:
means (2, 4, 6, 8; 12) responsive to signals provided by said sync generator for producing another line synchronizing signal comprising a sequence of other line sync pulses having a period during the active scan period such that an integral number of quarter cycles of the subcarrier occur between consecutive said other line sync pulses, the timing of said other line sync pulses during each vertical blanking interval incorporating an additional delay of half a subcarrier period such that the average period of said another line synchronizing signal is the same as the average period of said standard line synchronizing signal, and
means (7; 10,17) coupled to said sync generator and to said means for producing said other line synchronizing signal for combining at least said vertical synchronizing signal and said another line synchronizing signal.

2. Apparatus as set forth in Claim 1 wherein the period of said another line synchronizing signal during the active scan period corresponds to a frequency 100/1135 Hz higher than the frequency of the standard line synchronizing signal.

3. Apparatus as set forth in Claim 1 or 2 wherein said means for producing said another line synchronizing signal is comprised of:
an ANDING means (4; 16) having two inputs and an output,
means (6; 14) for coupling a signal of four times the subcarrier frequency provided by said sync generator to one input of said ANDING means, and
a one shot circuit (8; 18) responsive to said vertical synchronizing signal for applying a signal to the other input of said ANDING means to disable said output of said ANDING means for half a cycle of the subcarrier signal.

4. Apparatus as set forth in Claim 1 or 2 wherein said means for producing said another line synchronizing signal is comprised of:
a FIFO memory (10) having a write input, a read output, a write terminal and a read terminal,
means for coupling a composite sync signal including said standard line and vertical synchronizing signals provided by said sync generator to said write input,
a multiplier (12) coupled to said sync generator for applying to said write terminal a signal of frequency 1135 times the frequency of said standard line synchronizing signals,
an ANDING means (16) having an output connected to said read terminal and two inputs,
means (14) coupled to said sync generator for applying to one of said inputs a signal having a frequency four times the frequency of the subcarrier signal, and
a one shot circuit (18) responsive to the vertical synchronizing signal provided by said sync generator for applying a signal to the other input of said ANDING means effectively to decouple said one input of said ANDing means from said output for a period occurring during each vertical blanking interval that has a duration of half a cycle of the subcarrier signal.

5. Apparatus for generating synchronizing signals for use in a PAL colour television system, said apparatus comprising a sync generator (3; 11) for supplying standard line and field synchronizing signals (H, V) and a signal (F_{sc}) of standard subcarrier frequency, said line synchronising signal comprising a sequence of standard line sync pulses, characterised by further comprising:
means (2, 6; 12) responsive to signals supplied by said sync generator for producing another line synchronizing signal comprising a sequence of other line sync pulses, said another line synchronising signal having a shorter period during the active scan period than said standard line synchronizing signal such that an integral number of quarter cycles of said subcarrier occur during each line scanning interval,
means (4, 8; 16, 18) responsive to the signals supplied by said sync generator for increasing the time between said other line sync pulses occurring during each vertical blanking interval such that the average period of said another line synchronizing signal is the same as the average period of said standard line synchronizing signal, and
means (7; 10, 17) for combining the vertical synchronizing signal supplied by said sync generator with said another line synchronizing signal.

## Patentansprüche

1. Vorrichtung zum Erzeugen von Synchronisiersignalen zum Gebrauch in einem PAL-Farbfernsehensystem, wobei besagte Vorrichtung einen Taktgeber (3; 11) zum Erzeugen von Standard-Synchronisiersignalen eines PAL-Systems umfaßt, darunter ein Signal bei der Zwischenträgerfrequenz (f_{sc}), ein vertikales Synchronisiersignal (V) und ein Zeilengleichlaufsignal (H), welches eine Folge von Zeilensynchronisierimpulsen umfaßt, dadurch gekennzeichnet, daß sie ferner folgendes umfaßt:
Mittel (2, 4, 6, 8; 12), die auf vom besagten Taktgeber erzeugte Signale ansprechen, zum Erzeugen eines weiteren Zeilengleichlaufsignals, das eine Folge von weiteren Zeilensynchronisierimpulsen umfaßt, deren Periodendauer während der aktiven Abtastperiode so eingestellt ist, daß eine integrale Anzahl von Viertel zyklen des Zwischenträgers zwischen aufeinanderfolgenden besagten weiteren Zeilensynchronisierimpulsen abgegeben werden, und die Zeitfolge der besagten weiteren Zeilensynchronisierimpulsen während jedes vertikalen Austastintervalls eine weitere Verzögerung um eine halbe Zwischenträgerperiode enthält, so daß die mittlere Periodendauer des besagten weiteren Zeilengleichlaufsignals der mittleren Periodendauer des besagten Standard-Zeilengleichlaufsignals gleich ist, und
Mittel (7; 10, 17) die an den besagten Taktgeber und die besagten Mittel zum Erzeugen eines weiteren Zeilengleichlaufsignals gekoppelt sind, zum Verbinden mindestens des besagten vertikalen Synchronisiersignals und des besagten weiteren Zeilengleichlaufsignals.

2. Vorrichtung gemäß Patentanspruch 1, wobei die Periodendauer des besagten weiteren Zeilengleichlaufsignals während der aktiven Abtastperiode einer Frequenz entspricht, die 110/1135 Hz höher liegt als die Frequenz des Standard-Synchronisiersignals.

3. Vorrichtung gemäß Patentanspruch 1 oder 2, wobei die besagten Mittel zum Erzeugen des besagten weiteren Zeilengleichlaufsignals folgendes umfassen:
ein UND-Schaltungsmittel (4; 16) mit zwei Eingängen und einem Ausgang,
Mittel (6; 14) zum Koppeln eines Signals mit einer Frequenz, die viermal die Zwischenträgerfrequenz beträgt, vom besagten Taktgeber geliefert, an einen Eingang des besagten UND-Schaltungsmittels, und
einen monostabilen Schaltkreis (8; 18), der auf das besagte vertikale Synchronisiersignal anspricht, um ein Signal an den anderen Eingang des besagten UND-Schaltungsmittels anzulegen, um den besagten Ausgang des besagten UND-Schaltungsmittels für die Dauer eines halben Zyklus des Zwischenträgersignals zu sperren.

4. Vorrichtung gemäß Patentanspruch 1 oder 2, wobei die besagten Mittel zum Erzeugen eines weiteren Zeilengleichlaufsignals folgendes umfassen:
einen FIFO-Speicher (10) mit einem Schreibeingang, einem Leseausgang, einem Schreibterminal und einem Leseterminal,
Mittel zum Koppeln eines Kompositsynchronisiersignals, welches das besagte Standard-Zeilengleichlaufsignal und die besagten vertikale Synchronisiersignale umfaßt, die vom besagten Taktgeber erzeugt und an den besagten Schreibeingang geliefert werden,
eine Multiplizierschaltung (12), die an den besagten Taktgeber gekoppelt ist, um an den besagten Schreibeingang ein Signal anzulegen, dessen Frequenz 1135mal die Frequenz der besagten Standard-Zeilengleichlaufsignale beträgt,
ein UND-Schaltungsmittel (16), dessen Ausgang mit dem besagten Leseterminal und zwei Eingängen verbunden ist,
Mittel (14), die an den besagten Taktgeber gekoppelt sind, um an einen der besagten Eingänge ein Signal anzulegen, dessen Frequenz viermal die Frequenz des Zwischenträgersignals beträgt, und
einen monostabilen Schaltkreis (18), der auf das vom besagten Taktgeber erzeugte vertikale Synchronisiersignal anspricht, um ein Signal an den anderen Eingang des besagten UND-Schaltungsmittels anzulegen, um den besagten einen Eingang des besagten UND-Schaltungsmittels während jedes vertikalen Austastintervalls für die Dauer eines halben Zyklus des Zwischenträgersignals vom besagten Ausgang zu sperren.

5. Vorrichtung zum Erzeugen von Synchronisiersignalen zum Gebrauch in einem PAL-Farbfernsehensystem, wobei besagte Vorrichtung einen Taktgeber (3; 11) zum Erzeugen von Standard-Zeilengleichlauf- und Feldsynchronisiersignalen (H, V) und ein Signal (F_{sc}) bei der Standard-Zwischenträgerfrequenz, wobei das besagte Zeilengleichlaufsignal eine Folge von Standard-Zeilensynchronisierimpulsen umfaßt, dadurch gekennzeichnet, daß sie ferner folgendes umfaßt:
Mittel (2, 6; 12), die auf vom besagten Taktgeber erzeugte Signale ansprechen, zum Erzeugen eines weiteren Zeilengleichlaufsignals, das eine Folge von weiteren Zeilensynchronisierimpulsen umfaßt, wobei das besagte weitere Zeilengleichlaufsignal während der aktiven Abtastperiode eine kürzere Periodendauer als das Standard-Zeilengleichlaufsignal besitzt, so daß während jedes Zeilenaustastintervalls eine integrale Anzahl von Viertel zyklen des Zwischenträgers abgegeben wird,
Mittel (4, 8; 16, 18), die auf die vom besagten Taktgeber abgegebenen Signale ansprechen, um die Zeit zwischen den besagten weiteren Zeilensychronisierimpulsen, die während jedes vertikalen Austastintervalls abgegeben werden, zu verlängern, so daß die mittlere Periodendauer des besagten weiteren Zeilengleichlaufsignals der mittleren Periodendauer des besagten Standard-Zeilengleichlaufsignals gleich ist, und
Mittel (7; 10, 17) zum Verbinden des vom besagten Taktgeber erzeugten besagten vertikalen Synchronisiersignals und eines weiteren Zeilengleichlaufsignals.

## Revendications

1. Dispositif pour émettre des signaux de synchronisation utilisés dans un procédé PAL de télévision en couleurs, ledit dispositif comprenant un synchrotransmetteur (3 ; 11) servant à fournir les signaux de synchronisation normalisés d'un procédé PAL comprenant un signal à la fréquence de la sous-porteuse (f_{sc}), un signal de synchronisation de trame (V) et un signal de synchronisation de ligne (H) comprenant une séquence d'impulsions de synchronisation de ligne, caractérisé, en outre, en ce qu'il comporte :
des moyens (2, 4, 6, 8 ; 12) sensibles aux signaux fournis par ledit synchrotransmetteur pour produire un autre signal de synchronisation de ligne comprenant une séquence d'autres impulsions de synchronisation de ligne ayant une période au cours de la période de balayage active de telle sorte qu'un nombre entier de quarts de cycles de la sous-porteuse puisse survenir entre lesdites autres impulsions de synchronisation de ligne consécutives, la survenance desdites autres impulsions de synchronisation de ligne au cours de chaque intervalle de suppression de trame intégrant un retard supplémentaire d'une demie période de la sous-porteuse, de telle sorte que la période moyenne dudit autre signal de synchronisation de ligne soit la même que la période moyenne dudit signal de synchronisation de ligne normalisé ; et
des moyens (7 ; 10, 17) associés audit synchrotransmetteur et auxdits moyens de production dudit autre signal de synchronisation de ligne pour, au moins, combiner ledit signal de synchronisation de trame et ledit autre signal de synchronisation de ligne.

2. Dispositif tel que décrit dans la Revendication 1, dans lequel la période dudit autre signal de synchronisation de ligne au cours de la période de balayage actif correspond à une fréquence supérieure de 100/1135 Hz à la fréquence du signal de synchronisation de ligne normalisé.

3. Dispositif tel que décrit dans la Revendication 1 ou 2, dans lequel lesdits moyens de production dudit autre signal de synchronisation de ligne comportent :
un moyen d'exécuter l'opération ET (4 ; 16) ayant deux entrées et une sortie ;
le moyen (6 ; 14) d'associer un signal d'une valeur égale à quatre fois la fréquence de la sous-porteuse et fourni par ledit synchrotransmetteur à l'une des entrées dudit moyen d'exécution de l'opération ET ; et
un circuit monostable (8 ; 18) sensible audit signal de synchronisation de trame pour appliquer un signal à l'autre entrée dudit moyen d'exécuter l'opération ET afin de désactiver ladite sortie dudit moyen d'exécuter l'opération ET pendant un demi cycle du signal de la sous-porteuse.

4. Dispositif tel que décrit dans la Revendication 1 ou 2, dans lequel ledit moyen de production dudit autre signal de synchronisation de ligne comporte :
une mémoire FIFO ("premier entré, premier sorti") (10) ayant une entrée d'écriture, une sortie de lecture, un terminal d'écriture et un terminal de lecture ;
le moyen d'associer un signal de synchronisation composite comprenant lesdits signaux normalisés de synchronisation de ligne et de trame fournis par ledit synchrotransmetteur à ladite entrée d'écriture ;
un multiplicateur (12) associé audit synchrotransmetteur pour appliquer audit terminal d'écriture un signal dont la fréquence a 1135 fois la valeur de la fréquence desdits signaux de synchronisation de ligne normalisés ;
un moyen d'exécuter l'opération ET (16) ayant une sortie connectée audit terminal de lecture et deux entrées ;
le moyen (14) associé audit synchrotransmetteur pour appliquer à l'une desdites entrées un signal ayant une fréquence égale à quatre fois la fréquence du signal de la sous-porteuse ; et
un circuit monostable (18) sensible audit signal de synchronisation de trame fourni par ledit synchrotransmetteur pour appliquer un signal à l'autre entrée dudit moyen d'éxécuter l'opération ET pour découpler effectivement ladite entrée dudit moyen d'éxécuter l'opération ET de ladite sortie pendant une période survenant au cours de chaque intervalle de suppression de trame ayant une durée égale à un demi cycle du signal de la sous-porteuse.

5. Dispositif pour émettre des signaux de synchronisation utilisés dans un procédé PAL de télévision en couleurs, ledit dispositif comprenant un synchrotransmetteur (3 ; 11) servant à fournir des signaux normalisés de synchronisation de ligne et de trame (H, V) et un signal (F_{sc}) à la fréquence étalon de la sous-porteuse, ledit signal de synchronisation de ligne comprenant une séquence d'impulsions normalisées de synchronisation de ligne, caractérisé, en outre, en ce qu'il comporte :
des moyens (2, 6 ; 12) sensibles aux signaux fournis par ledit synchrotransmetteur pour produire un autre signal de synchronisation de ligne comprenant une séquence d'autres impulsions de synchronisation de ligne, ledit autre signal de synchronisation de ligne ayant, au cours de la période de balayage active, une période plus courte que celle dudit signal de synchronisation de ligne normalisé, de telle sorte qu'un nombre entier de quarts de cycles de ladite sous-porteuse puisse survenir au cours de chaque intervalle de balayage de ligne ;
des moyens (4, 8 ; 16, 18) sensibles aux signaux fournis par ledit synchrotransmetteur pour augmenter la durée entre lesdites autres impulsions de synchronisation de ligne survenant au cours de chaque intervalle de suppression de trame, de telle sorte que la période moyenne dudit autre signal de synchronisation de ligne soit la même que la période moyenne dudit signal de synchronisation de ligne normalisé ; et
des moyens (7 ; 10, 17) de combiner le signal de synchronisation de trame fourni par ledit synchrotransmetteur audit autre signal de synchronisation de ligne.
